# EUROPÄISCHE PATENTSCHRIFT

(11) **EP 2 202 508 B1**
(45) Veröffentlichungstag und Bekanntmachung des Hinweises auf die Patenterteilung: **09.11.2016**
(21) Anmeldenummer: 09179365.3
(22) Anmeldetag: 16.12.2009
(51) Int. Cl.: G01N 21/90

(54) **Inspektionsvorrichtung**
Inspection device
Dispositif d'inspection

(30) Priorität: 24.12.2008 DE 102008063077
(43) Veröffentlichungstag der Anmeldung: 30.06.2010
(73) Patentinhaber: Krones AG, 93073 Neutraubling (DE)
(72) Erfinder: Kwirandt, Dr. Rainer, 93073 Neutraubling (DE)
(74) Vertreter: Bittner, Bernhard

(56) Entgegenhaltungen:
- EP-A1- 1 477 794
- EP-A1- 1 600 764
- EP-A1- 1 985 997
- DE-C1- 19 953 738
- DE-U1-202005 006 220
- GB-A- 2 334 576

## Beschreibung

Die vorliegende Erfindung beschreibt eine Inspektionsvorrichtung und insbesondere eine Inspektionsvorrichtung für Behältnisse. Im Bereich der getränkeverarbeitenden Industrie ist es üblich, nicht nur die abgefüllten Behältnisse bzw. die abzufüllenden Behältnisse selbst zu begutachten, sondern auch die auf diesen Behältnissen angebrachten Etiketten. So können derartige Etiketten beispielsweise Störstellen wie Verwerfungen, Risse oder dergleichen aufweisen, die auf diese Weise detektiert werden sollen.

Dabei sind aus dem Stand der Technik Inspektionsvorrichtungen bekannt, bei denen die zu inspizierenden Behältnisse auf einen Transportband transportiert und beispielsweise mittels Umlenkspiegeln von mehreren Seiten inspiziert werden. Besondere Probleme treten hierbei bei so genannten metallisierten Etiketten auf, welche gewünschte Reflexe erzeugen, die teilweise bei der Beobachtung durch Polfilter (ungewollt) gelöscht werden.

Aus DE 199 04732 A1 ist eine Behälterprüfmaschine bekannt. Dabei werden die zu prüfenden Behältnisse auf einem Transportband geführt und mittels CCD-Kameras beobachtet. Weiterhin sind Lichtquellen vorgesehen, welche die Behältnisse bezüglich der CCD-Kamera von hinten beleuchten.

Die DE 103 22 459 B3 beschreibt eine Inspektionsvorrichtung für Flaschen. Dabei werden die Flaschen mit Beleuchtungseinrichtungen von oben beleuchtet und Kameras beobachten die Behältnisse von der Seite her bzw. quer zur Flaschenachse. Gleichfalls wird ein heller Bildhintergrund verwendet um die Flaschen hier gegenüber vorteilhaft abbilden zu können.

Die DE 20 2005 006 220 U1 beschreibt eine Inspektionsvorrichtung für die Inspektion von verschlossenen Behältern. Dabei ist eine Einhausung vorgesehen, innerhalb derer eine Beleuchtungsvorrichtung und Kameras angeordnet sind.

Auch ist es bekannt, den gesamten Innenraum homogen auszustatten um den Inspektionsraum diffus auszuleuchten, wobei hier großer Wert auf die optischen Eigenschaften bezüglich Reflektion und Diffusion gelegt wird. Auch ist es bekannt, die Beschaffenheit des Transporteurs entsprechend anzupassen um auf diese Weise zu erreichen, dass alle Oberflächen des Gehäuses und innerhalb des Gehäuses Licht auf den zu untersuchenden Behälter einstrahlen, sodass all diese Flächen innerhalb des Gehäuses als Leuchtquelle verwendet werden.

Bei der Bildaufnahme besteht jedoch das Problem, dass die Behältnisse bezüglich des Transportbandes nicht stets die gleiche Position aufweisen und sich daher bei dem aufgenommenen Bild von Flasche zu Flansche Unterschiede ergeben können. Im Stand der Technik wird jedoch auf diese Positionierungenauigkeit der Behälter nicht genauer eingegangen. Die bekannten Vorrichtungen gehen jeweils von einer idealen Position des Behältnisses aus, was bei hohen Durchlaufszeiten von bis zu 50 000 Behältern und mehr pro Stunde nicht realistisch ist.

In realen Systemen sind die Behältnisse nicht genau an der gleichen Position in Transportrichtung und lateral hierzu. In der Transportrichtung hat jedes System eine Verzögerung und einen Jitter. Nimmt man beispielsweise eine Verzögerung von einer Millisekunde an, welches einen typischen Wert darstellt, und wird eine Transportgeschwindigkeit von zwei Metern pro Sekunde zugrunde gelegt so können sich hieraus Abweichungen in einem Bereich von zwei Millimetern ergeben. Geht man zusätzlich davon aus, dass bei Brems- und Beschleunigungsvorgängen des Transportbandes ein Rutschen der Behältnisse gegenüber dem Transportband auftreten kann, so können sich insgesamt Ortsungenauigkeiten im Bereich von 5 mm ergeben.

Auch ist die laterale Position zur Fahrrichtung nicht präzise. Nimmt man ein Spiel des Transporteurs von ca. 10 mm an, so kann die Position lateral zur Fahrtrichtung um bis zu 5 mm variieren. Dies führt für die Inspektionsaufgabe zu erheblichen Störungen. Falls beispielsweise davon ausgegangen wird, dass eine Kamera einen Bereich von 300 mm inspiziert und von dem Objekt 600 mm entfernt ist wobei vier Kameras jeweils 90° zueinander versetzt sind, werden die 300 mm auf ca. 600 Pixel projiziert, d. h. 0,5 mm entsprechen 1 Pixel.

Ist das Behältnis in einer Transportrichtung um z. B. 5 mm verschoben, so wird die Entfernung zu einer Kamera um 3,5 mm größer und zu einer weiteren Kamera um 3,5 mm näher. Dies führt dazu, dass sich ein Abbildungsfehler an der Nahtstelle von -4 Pixel bei der einen Kamera und +3 Pixel bei der anderen Kamera ergeben kann. Sollen die vier Ansichten entzerrt und zu einer Gesamtabwicklung zusammengeführt werden, so entsteht an der Nahtstelle zwischen den beiden Kameras ein Abbildungsfehler von 7 Pixeln bezogen auf 600 Pixel. Dieser Fehler ist vor allem in den Randbereichen der Kamera sichtbar.

Neben der Abbildungsänderungen ist der seitliche. Versatz im Kamerabild von Bedeutung. Die Entzerrungsmaske passt mit der theoretisch idealen Position nicht mehr überein und Bereiche werden mit falschen Streckungsfaktoren bewertet, d. h. der Fehler kann sich integral fortpflanzen.

Aus diesen Gründen ist es von Vorteil, die tatsächliche Position des Behältnisses zu kennen. Hierzu wird im einfachsten Fall die Kontur des Behältnisses ermittelt, zumindest teilweise. Zu diesem Zweck muss sich jedoch die Kontur vom Hintergrund abheben. Daher ist es erforderlich, die Flaschenränder bei den aufgenommenen Bildern exakt zu lokalisieren, was prinzipiell bei ausreichenden Kontrasten mittels Softwarelösungen möglich ist. Weiterhin wird aufgrund der Krümmungen der Flaschen zum Flaschenrand hin die Verzerrung der Etiketten im Bild immer größer. Damit ist auch für eine vorteilhafte Entzerrung des Bildes eine genaue Lokalisierung der Flaschenkontur erforderlich. Oftmals sind jedoch die Etiketten nicht vollumfänglich auf den Flaschen aufgebracht, so dass die Flaschenkontur auch an unbeklebten Stellen ermittelt werden muss. Bei der Verwendung dunkler Flaschen ist es möglich, einen entsprechenden hellen Hintergrund zu verwenden, um die Position der Behältnisse genau zu lokalisieren. Bei der Verwendung von hellen Flaschen wäre es möglich einen dunkleren Hintergrund zu verwenden um eine Lokalisierung der Flaschen hier zu erleichtern. Daher müssen bei der Verwendung unterschiedlicher Flaschen jedoch die Hintergründe ausgetauscht werden, um diese jeweils gegenüber dem Hintergrund abzuheben.

Im Stand der Technik sind, wie oben erwähnt, die Gehäuse entweder komplett schwarz oder homogen, diffus und hell ausgeleuchtet. Im Falle von schwarzen Gehäusen können nur an hellen milchigen Behältern die Konturen detektiert werden, nicht aber an dunklen Behältern bzw. Produkten wie z. B. Cola oder Rotwein oder einer dunklen Bierflasche.

Umgekehrt kann man bei Verwendung von hellen Gehäusen nur an dunklen Behältern die Kontur erfassen und klare helle Behälter mit klarem hellen Produkt wie z. B. Wasser in Weißglas, Wasser in Einweg-PET, evtl. sogar Milch in Weißglas oder ähnliches erlauben keine Konturerfassung. Die Kontraste reichen nicht aus, um eine Konturbestimmung durchzuführen. In diesem Falle müsste zumindest die Einhausung jeweils ausgetauscht werden wenn sowohl helle als auch dunkle Produkte untersucht werden sollen.

Der vorliegenden Erfindung liegt daher die Aufgabe zugrunde, eine Beobachtung unterschiedlicher Flaschen und auch insbesondere unterschiedlich heller Flaschen mit geringem Aufwand zu ermöglichen. Insbesondere soll eine Lösung gesucht werden, um aufwändige Umrüstzeiten zu vermeiden.

Dies wird erfindungsgemäß durch eine Vorrichtung nach Anspruch 1 und ein Verfahren nach Anspruch 10 erreicht. Vorteilhafte Ausführungsformen und Weiterbildungen sind Gegenstand der Unteransprüche.

Eine erfindungsgemäße Vorrichtung zur Untersuchung der Außenoberflächen von Behältnissen weist eine Strahlungseinrichtung auf, welche Licht auf ein zu untersuchendes Behältnis richtet. Weiterhin ist eine Transporteinrichtung vorgesehen, welche das Behältnis gegenüber der Strahlungseinrichtung transportiert, sowie eine Bildaufnahmeeinrichtung, welche wenigstens ein Bild des von der Strahlungseinrichtung beleuchteten Behältnisses aufnimmt, wobei bezüglich der Bildaufnahmeeinrichtung hinter dem Behältnis ein Hintergrund angeordnet ist, dem gegenüber das Behältnis abbildbar ist. Damit detektiert die Bildaufnahmeeinrichtung die von der Strahlungseinrichtung auf das Behältnis eingestrahlte und von diesem Behältnis zurückgeworfene (insbesondere gestreute) Strahlung.

Erfindungsgemäß weist der Hintergrund wenigstens einen helleren Bereich und wenigstens einen gegenüber diesem helleren Bereich dunkleren Bereich auf, vorzugsweise jedoch zwei dunkle Bereiche bei Betrachtung mit einer Bildaufnahmeeinrichtung (Kamera), nämlich dem helleren Bereich hinter einem betrachteten Behältnis und rechts sowie links daneben die dunkleren Bereiche, um bei hellen Behältnissen klar abgegrenzte Konturen an beiden Seiten zu erhalten.

Damit wird hier insbesondere zumindest teilweise der gegenüber der Bildaufnahmeinrichtung gegenüberliegende Sichtbereich eines Gehäuses hell ausgestaltet. Dabei ist die Frage nach den optischen Eigenschaften sekundär und insbesondere müssen nicht bevorzugte Reflektions- und Diffusionseigenschaften vorliegen. Es genügt, die Kontur der dunklen Behältnissen erkennen zu können. Der hellere Bereich kann beispielsweise eine Farbe aufweisen oder auch weiß sein.

Bei den zu untersuchenden Behältnissen handelt es sich insbesondere, aber nicht ausschließlich, um Glas- oder Kunststoffflaschen, welche bereits mit Etiketten versehen sind. Unter der Außenoberfläche des Behältnisses wird insbesondere die mit einem Etikett versehene Außenoberfläche des Behältnisses verstanden. Unter der von dem Behältnis zurück geworfenen Strahlung wird insbesondere eine gestreute Strahlung verstanden. Die Aufnahme reflektierter Strahlung wird bevorzugt vermieden. Unter einer Anordnung des Hintergrunds hinter dem Behältnis wird insbesondere der geometrische Bereich hinter dem Behältnis verstanden, der durch die Bildaufnahmeeinrichtung bzw. Kamera ggfs. auch in Folge von Benechnungs- und/oder Beugungseffekten an dem Behältnis erfassbar ist.

Vorzugsweise weist der Hintergrund einen Kontrastabschnitt auf, in dem der hellere Bereich in den dunkleren Bereich übergeht. Bei dem Kontrastabschnitt kann es sich beispielsweise um eine Kante oder Linie handeln, in der ein heller insbesondere weißer Bereich in einen dunkleren, insbesondere schwarzen Bereich übergehen kann.

Vorzugsweise ist der in der Blickrichtung der Bildaufnahmeeinrichtung hinter dem Behältnis liegende Bereich des Hintergrunds ein hellerer Bereich. Dies bedeutet, dass entlang einer geraden Linie, welche ausgehend von der Bildaufnahmeeinrichtung durch die Längsachse des Behältnisses verläuft, hinter dem Behältnis ein hellerer Bereich angeordnet ist. Durch diese Vorgehensweise kann erreicht werden, dass der Bereich hinter der Flasche hell ist und damit eine gute Möglichkeit geschaffen wird, um dunkle Flaschen gegenüber dem Hintergrund abzuheben.

Betrachtet man den Strahlengang durch eine klare Flasche mit einer klaren Flüssigkeit, so stellt man fest, dass der Strahlengang durch diese gefüllte Flasche stark gebrochen wird, sogar so stark, dass sich Strahlen direkt hinter der Flasche kreuzen. Dabei werden insbesondere die an der Flaschenkontur verlaufenden Strahlenverläufe weit abgelenkt.

Die der Erfindung zugrunde liegenden Idee besteht darin, die dunklen Bereiche derart anzuordnen, dass das von diesen ausgehende Licht dennoch bei Beobachtung der Flasche beobachtet werden kann. Damit können von der Bildaufnahmeeinrichtung auch die weit entfernten dunkleren bzw. schwarzen Teile des Hintergrunds gesehen werden und auf diese Weise wird die Flaschenkontur schwarz und ist damit leicht vor dem hellen Hintergrund zu sehen. Damit ist es möglich, die Kontur der Flasche aufzufinden. Bevorzugt sind dabei die dunkleren Bereiche des Hintergrunds um ca. 45° gegenüber der jeweiligen Betrachtungsrichtung verschoben.

Bei einer weiteren vorteilhaften Ausführungsform verläuft ein Übergang bzw. der Kontrastabschnitt zwischen einem helleren Bereich und einem dunkleren Bereich des Hintergrunds im Wesentlichen vertikal. Auf diese Weise kann eine besonders genaue Feststellung der Flaschenkontur bzw. der Position der Flasche erfolgen. Unter im Wesentlichen vertikal werden auch solche Verläufe verstanden, die von der vertikalen Richtung um weniger als 10° abweichen

Bei einer weiteren vorteilhaften Ausführungsform schließt sich an den helleren Bereich des Hintergrunds an beiden Seiten je ein dunklerer Bereich des Hintergrunds an. Auf diese Weise können die beiden Seiten der Flasche bzw. die Randkonturen festgestellt werden. Es wäre jedoch auch möglich, nur einen Kontrastbereich vorzusehen, beispielsweise dann, wenn der Durchmesser der Flasche bekannt ist, und auf diese Weise aus einer Kontraststelle bzw. einen Seitenrand der Flasche die zweite Kontraststelle bzw. der weitere Seitenrand rechnerisch ermittelt werden kann. Der erwähnte dunkle Bereich ist bei dieser vorteilhaften Ausführungsform damit nur bei helleren Behältnissen wegen der Brechung sichtbar. Bei dunklen Behältnissen mit dunkler Flüssigkeit tritt kein Strahlengang durch das Behältnis selbst hindurch.

Bei einer weiteren vorteilhaften Ausführungsform strahlt die Strahlungseinrichtung das Licht entlang einer Längsrichtung des Behältnisses auf dieses ein, beispielsweise von oben.

Wie oben erwähnt reflektieren die Etiketten bzw. Flaschen selbst auch ihre Umgebung. Da diese Flaschen weiterhin Krümmungen aufweisen, werden auf diese Weise ungewollte Spiegeleffekte erhöht. Aus diesem Grund wird bevorzugt eine hohe Lichteinstrahlung von oben verwendet (wobei auch eine Einstrahlung von unten möglich ist), wobei dieses Licht durch engstrahlende Leuchtdioden und bevorzugt auch Fresnellinsen auf die zu inspizierende Flasche konzentriert wird. Durch diese Vorgehensweise werden Spiegelbilder von der Umgehung und Nachbarflaschen auf die Flasche minimiert. Ein gewisser Anteil an Streulicht verteilt sich vorteilhaft innerhalb des Gehäuses und erzeugt ein Licht, welches zur Lokalisierung der Behältnisse verwendet wird. Auf diese Weise wird bevorzugt die hohe Dynamik der Bildaufnahmeeinrichtung genutzt. Die eigentliche Inspektion der Behältnisse erfolgt mit viel Licht bei den oberen Graustufen und das Auffinden der Flaschenkontur bei wenig Licht (Schummerlicht) in den unteren Graustufen.

Bei einer weiteren vorteilhaften Ausführungsform weist die Vorrichtung ein Gehäuse auf, welches die Bildaufnahmeeinrichtung und das zu beobachtende Behältnis im Wesentlichen vollständig umgibt, wobei der Hintergrund Bestandteil dieses Gehäuses ist. Damit befindet sich vorzugsweise die gesamte Vorrichtung innerhalb des erwähnten Gehäuses, so dass auch störende Lichteffekte von außen vermieden werden können. Vorteilhaft weist die Vorrichtung eine Vielzahl von Bildaufnahmeeinrichtungen auf, welche in Umfangsrichtung um das Behältnis angeordnet sind. Bei einer bevorzugten Ausführungsform sind insgesamt vier Bildaufnahmeeinrichtungen vorgesehen, welche in Umfangsrichtung gleichmäßig um das Behältnis angeordnet sind und das Behältnis jeweils quer zur Längsachse bzw. leicht schräg zu dieser Richtung beobachten.

Bei einer weiteren bevorzugten Ausführungsform weist das Gehäuse eine in Richtung des Behältnisses gewandte Deckelfläche auf und auch diese Deckelfläche weist sowohl hellere als auch dunklere Bereiche auf.

Auch wäre es gewünscht, das Gehäuse nicht allzu hoch auszuführen, um Material einzusparen. Aus diesem Grunde wird auch die Decke dieses Gehäuses mit einen hell-dunkel bzw. schwarz-weiß Muster versehen, welches die Farbgebung der Seitenwände perspektivisch korrekt weiterführt. Dies wird unter Bezugnahme auf die Figuren genauer erläutert.

Bei einer weiteren vorteilhaften Ausführurigsform ist zwischen der Strahlungseinrichtung und dem Behältnis ein Linsenkörper vorgesehen. Auf diese Weise wird eine gleichmäßige Beleuchtung der gesamten Flasche erreicht. Durch die Kombination von engstrahlenden LEDs und der genannten Fresnellinse wird das Licht ohne Störung durch die Nachbarflaschen auf die zu beobachtende Flasche gebracht. Das Licht der vergleichsweise großen LED-Fläche, welche bevorzugt wenigstens 100 mm x 100 mm, besonders bevorzugt wenigstens 200 mm x 200 mm und besonders bevorzugt wenigstens von 300 mm x 300 mm beträgt, wird durch die genannte Fresnellinse auf die Transporteinrichtung bzw. das Transportband fokussiert. In diesem Bereich ist das Licht auf eine Kreisfläche von ca. 100 mm Durchmesser konzentriert. Auf diese Weise wird die quadratische Abnahme der Beleuchtungsstärke mit dem Abstand von der Strahlungseinrichtung teilweise wieder kompensiert, so dass sich eine gleichmäßigere Beleuchtung längs der Flaschenhöhe ergibt.

Durch Helligkeitsvariation des LED-Feldes kann die Beleuchtung noch mehr homogenisiert werden. Bei einer bevorzugten Ausführungsform wird ein quadratischer Rahmen mit vier großen LED-Modulen verwendet, sowie zwei kleinen LED-Module in der Mitte, die jedoch zumindest zeitweise ausgeschaltet oder dunkler eingestellt sind.

Vorzugsweise weist der Linsenkörper, bei dem es sich besonders bevorzugt, um eine Fresnellinse handelt, eine Brennweite von annähernd 400 mm und einen Durchmesser im Bereich vorn 300 - 400 mm auf. Die Linse kann ggf. auch viereckig ausgebildet sein. Das Licht der LED-Module wird durch die Linse in einem Kegel auf das Behältnis gelenkt und erlaubt so eine gleichmäßige 360°-Beleuchtung. Durch die gegenüber dem Behälterdurchmesser deutlich größere Leuchtfläche und die schräg von außen erfolgende Beleuchtung wird störender Schattenwurf am zylindrischen Behälterbereich vorteilhaft vermieden.

Bei einer weiteren vorteilhaften Ausführungsform sind die helleren Bereiche des Hintergrunds in den Ecken des Gehäuses angeordnet. Auch die Bildaufnahmeeinrichtungen sind bevorzugt in den Ecken des Gehäuses angeordnet. Damit ist vorzugsweise jede Bildaufnahmeeinrichtung von einem hellen Hintergrund umgehen, der jedoch jeweils für die Aufnahme der gegenüberliegenden Bildaufnahmeeinrichtung dient.

Bei einer weiteren vorteilhaften Ausführungsform weist das Gehäuse einen Zufuhrbereich und einen Abfuhrbereich für die Behältnisse auf und diese Bereiche sind in dunklen Bereichen des Hintergrunds angeordnet. Von außen eintretendes Licht könnte durch die Flaschen und/oder das Transportband in störender Weise gebrochen bzw. gestreut werden. Zu diesem Zweck sind an dem Ein- und Ausgang der Vorrichtung dunkle Tunnel angebracht, da ein heller Ein-/Ausgang die Flaschenkontur wieder aufhellen würde.

Vorzugsweise sind die Hintergrundsflächen höher als die Höhe der Flasche selbst. Teilweise werden die Flaschen auch in schräger Richtung beobachtet und weiterhin weisen viele Flaschen kugelige Einschnürungen auf. Auf diese Weise wird das Licht nicht nur seitlich sondern auch vertikal abgelenkt. Aus diesem Grund ist es vorteilhaft, die genannten Hintergrundsflächen höher auszuführen, als die Flaschenhöhe und bevorzugt wenigstens doppelt so hoch wie die Flaschenhöhe. Bevorzugt ist die Flasche ungefähr auf dem halben Weg zwischen der Kamera und dem Hintergrund angeordnet. Nach unten bezüglich der Flasche steht üblicherweise ausreichend Platz zur Verfügung und darüber hinaus sind die Flaschen in diesem Bereich meist zylindrisch ausgeführt, so dass es ausreichend ist, die Seitenwände des Gehäuses unterhalb der Transporteinrichtung ansetzen zu lassen.

Vorzugsweise ist der Hintergrund mit Ausnahme der genannten hell-dunkel Kontraste konturlos. Wie oben erwähnt, ist es bei hellen und klaren Flaschen möglich, durch diese hindurch zu sehen. Um sich dadurch ergebende Störungen für die Auswertung gering zu halten, wird vorzugsweise das Gehäuse bzw. der Hintergrund möglichst strukturlos ausgeführt, d. h. strukturlos mit Ausnahme des erwähnten schwarz-weiß Musters für die Konturfindung. Auf diese Weise wird ein weitgehend homogener Hintergrund erreicht und die genannten Ecken des Gehäuses sind im Bild stets hinter dem Behältnis und stören für die Konturfindung nicht.

Wie erwähnt, sind jedoch die Bildaufnahmeeinrichtungen in den Ecken angeordnet. Dies bedeutet, dass in diesem Bereich das Gehäuse zumindest Löcher aufweist, welche in der Bildaufnahme zu Störungen führen können. Aus diesem Grunde blicken die Bildaufnahmeeinrichtungen bevorzugt durch kleine Löcher im Gehäuse auf die Flaschen bzw. Behältnisse und werden hinter weißen Objektivgehäusen versteckt. Diese Löcher sind als kleine Störungen mindestens einmal in hellen Flaschen auffindbar. Vorzugsweise werden jedoch diese speziell lokalisierten Störungen durch eine geeignete Software kompensiert.

Anstelle eines eckigen Gehäuses wäre es auch möglich, das Gehäuse rund auszuführen und ebenfalls die Bildaufnahmeeinrichtungen in Umfangsrichtung um die Behältnisse anzuordnen.

Bei einer weiteren vorteilhaften Ausführungsform weist die Strahlungseinrichtung eine gepulste Lichtquelle auf. Damit werden sowohl zur Erzeugung des Lichts als auch zur Aufnahme gepulste Ereignisse verwendet bzw. die Behältnisse jeweils mit Blitzlicht beobachtet.

Die vorliegende Erfindung ist weiterhin auf ein Verfahren zum Untersuchen der Außenoberflächen von Behältnissen gerichtet, wobei die zu untersuchenden Behältnisse mit einer Transporteinrichtung transportiert werden, mittels einer Strahlungseinrichtung beleuchtet werden und das von der Strahlungseinrichtung beleuchtete Behältnis von einer Bildaufnahmeeinrichtung aufgenommen wird, wobei die Bildaufnahmeeinrichtung ein ortsaufgelöstes Bild des aufgenommenen Lichts bzw. der Oberfläche des Behältnisses ausgibt.

Erfindungsgemäß ist bezüglich der Bildaufnahmeeinrichtung hinter dem Behältnis ein Hintergrund angeordnet, wobei der Hintergrund wenigstens einen helleren Bereich und wenigstens einen gegenüber diesem helleren Bereich dunkleren Bereich aufweist. Die dunklen Bereiche sind dabei in der Transportrichtung und quer dazu angeordnet. Gegenüber den Betrachtungsrichtungen sind die dunklen Zonen vorzugsweise um 45° verschoben.

Weitere Vorteile und Ausführungsformen ergeben sich aus den beigefügten Zeichnungen:

Darin zeigen:
- Fig. 1: eine schematische Darstellung zur Veranschaulichung der Erfindung;
- Fig. 2: eine Darstellung eines Strahlengangs durch ein zu untersuchendes Behältnis;
- Fig. 3: eine perspektivische Darstellung einer erfindungsgemäßen Vorrichtung;
- Fig. 4: eine weitere perspektivische Darstellung einer erfindungsgemäßen Vorrichtung; und
- Fig. 5: eine Draufsicht von unten auf eine erfindungsgemäße Vorrichtung.

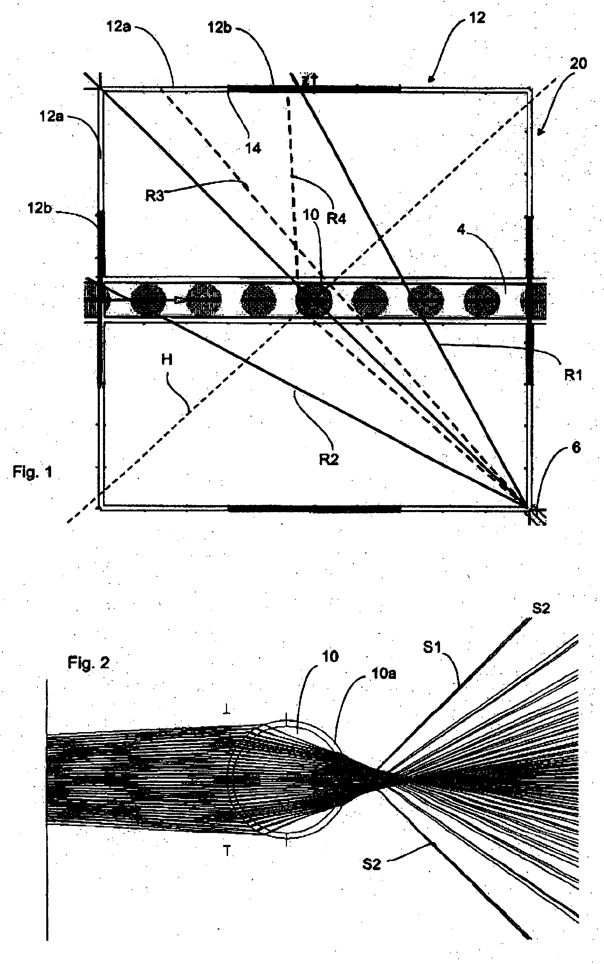

Figur 1 zeigt eine schematische Darstellung zur Erläuterung der Erfindung. Dabei ist bei dieser Darstellung nur eine Bildaufnahmeeinrichtung 6 gezeigt, welche eine zu untersuchende Flasche 10 aufnimmt. Die Strahlungseinrichtung ist in Figur 1 nicht dargestellt. Das Bezugszeichen 20 bezieht sich auf ein Gehäuse, welches einen in seiner Gesamtheit mit 12 bezeichneten Hintergrund aufweist, der in der Blickrichtung der Bildaufnahmeeinrichtung 6 hinter dem Behältnis 10 angeordnet ist. Die Bildaufnahmeeinrichtung 6 ist dabei in der Lage, den Bereich, der durch die Ränder R1 und R2 begrenzt ist, zu beobachten.

Damit nimmt die Bildaufnahmeeinrichtung 6 bevorzugt sowohl den helleren Bereich 12a des Hintergrunds 12 als auch den dunkleren Bereich 12b des Hintergrunds 12 auf. In einem Kontrastabschnitt 14 geht der hellere Bereich 12a in den dunkleren Bereich über. Bei Beobachtung eines dunklen Behältnisses hebt sich dieses dunkle Behältnis gegen den direkt dahinter liegenden hellen und bevorzugt weißen Bereich 12a des Hintergrunds 12 ab. Bei Verwendung eines hellen Behältnisses mit einer hellen Flüssigkeit beobachtet die Bildaufnahmeeinrichtung 6 jedoch auch die schwarzen Hintergrundbereiche durch das Behältnis hindurch, außerhalb davon jedoch wieder helle Bereiche, so dass aufgrund dieses Kontrastes die Kontur der Flasche bestimmbar ist. Falls eine helle Flasche mit heller Flüssigkeit beobachtet wird, sind links und rechts von der Flasche die hellen Bereiche des Hintergrunds 12a sichtbar und an den Rändern der Flasche treten so starke Brechungen auf, dass die jeweils dunklen Hintergrundteile sichtbar sind.

Das Bezugszeichen H bezieht sich auf eine Hilfslinie zur Veranschaulichung der geometrischen Verhältnisse. Diese Hilfslinie H steht senkrecht zu der Beobachtungshauptrichtung der Bildaufnahmeeinrichtung 6. Der von der Bildaufnahmeeinrichtung 6 aus betrachtet hinter der Hilfslinie H liegende Abschnitt des Hintergrunds 12 wird als der hinter dem:Behältnis liegende Bereich des Hintergrunds 12 angesehen.

Figur 2 veranschaulicht die Strahlengänge durch ein Behältnis bzw. eine Flasche 10. Man erkennt, dass die äußeren Strahlungsteile S1 und S2 an den Rändern 10a des Behältnisses 10 besonders stark gebrochen werden, so dass auf diese Weise die dunklen Hintergrundbereiche 12b (Fig. 1) durch die Flasche hindurch sichtbar sind. Die eher zentralen Bereiche des Behältnisses werden jedoch nicht in der gleichen starken Weise gebrochen, so dass in diesem Bereich lediglich der helle Hintergrundbereich 12a erkennbar ist. Damit können anhand der erwähnten Streifen die Randkonturen des Behältnisses sehr exakt bestimmt werden.

In Figur 1 wurden zur Veranschaulichung zwei Strahlen R3 und R4 gezeigt. Der Strahlengang R3 verläuft unmittelbar an dem Behältnis 10 vorbei, so dass die Bildaufnahmeeinrichtung hier einen helleren Bereich 12a des Hintergrunds 12 aufnimmt. Der Strahl R4 wird an dem Behältnis 10 so stark gebrochen, dass hier ein dunkler Hintergrund 12b des Hintergrunds 12 von der Bildaufnahmeeinrichtung 6 aufgenommen wird. Damit wirkt das gefüllte Behältnis wie eine Zylinderlinse.

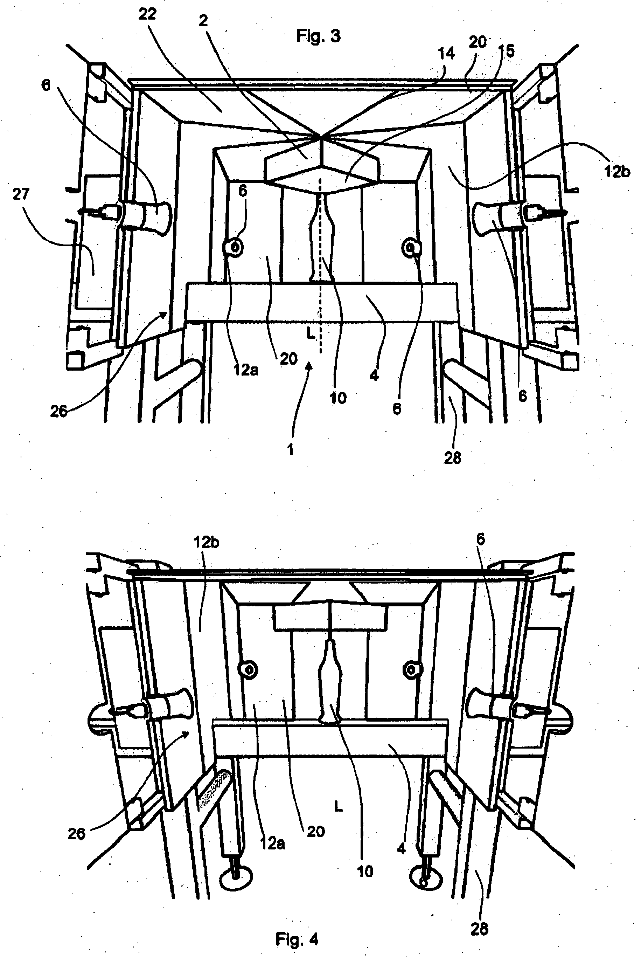

Figur 3 zeigt eine erste perspektivische Darstellung einer erfindungsgemäßen Vorrichtung 1. Man erkennt hier wiederum das Gehäuse 20, welches einen Deckel 22 aufweist. In den vier Ecken des Gehäuses 20 sind die vier Bildaufnahmeeinrichtungen 6 vorgesehen. Das Bezugszeichen 2 bezieht sich hier auf eine Strahlungseinrichtung, welche das Behältnis 10 von oben her in der Längsrichtung L des Behältnisses beleuchtet. Dabei weist diese Strahlungseinrichtung 2 einen quadratischen Querschnitt auf, der um 45° bezüglich der Laufrichtung eines Transportbandes 4, auf dem die Flaschen hier von links nach rechts gefördert werden, verdreht ist. Üblicherweise sind die zu beobachtenden Etiketten in der Bildmitte am hellsten und werden zum Flaschenrand hin dunkler, trotz gleichmäßiger Beleuchtung.

Dieser Effekt wird gemildert, da in Richtung des Randes der Behältnisse 10 die jeweils ausladenden Ecken der quadratischen Strahlungseinrichtung 2 angeordnet sind. Weiterhin wird erreicht, dass die einzelnen Bildaufnahmeeinrichtungen nicht mehr in Richtung der Ecken der Strahlungseinrichtung 2 blicken, sondern auf die jeweilige (weiter beabstandete) Mitte der Seiten. Auf diese Weise wird erreicht, dass die gegenüberliegende Ecke nicht mehr in das Bild der besagten Bildaufnahmeeinrichtung 6 ragt.

Weiterhin weist die Strahlungseinrichtung eine Linse, insbesondere eine Fresnellinse 15 auf. Alternativ zu dieser Fresnellinse mit den LED-Modulen wäre es auch möglich, jede einzelne LED in der Strahlungseinrichtung entsprechend auszurichten, was jedoch fertigungstechnisch komplizierter ist. Durch die Anordnung der Fresnellinse ist es möglich, mit fertigen einfachen Bauteilen eine sehr spezielle Strahlungseinrichtung 2 herzustellen.

Man erkennt, dass das Gehäuse jeweils in seinen Ecken weiße Hintergrundbereiche 12a aufweist. In den Bereichen zwischen den Ecken befinden sich jeweils schwarze Bereiche 12b des Hintergrunds. Diese Bereiche erstrecken sich auch in den Deckel 22 der Vorrichtung, wobei dort diese schwarzen Bereiche zum Mittelpunkt hin spitz zulaufen und auf diese Weise in etwa in der Draufsicht ein Malteser-Kreuz ausbilden. Das Bezugszeichen 26 bezieht sich auf eine Einführung für die Transporteinrichtung 4, die ebenfalls in dem Bereich des dunklen Hintergrunds 12b angeordnet ist. Außerhalb des Gehäuses 22 befindet sich ein Tunnel 27, der die Abdunklung im Inneren des Gehäuses fördert. Das Bezugszeichen 28 bezieht sich auf einen Träger für die Vorrichtung 1.

Figur 4 zeigt eine weitere Ansicht einer erfindungsgemäßen Vorrichtung 1. Man erkennt auch hier, dass an den Ein- und Ausgängen der Transporteinrichtung 4 jeweils dunkle Bereiche 12b des Hintergrunds angeordnet sind und in den jeweiligen Ecken helle Bereiche. Im Gegensatz zum Stand der Technik wird daher der Innenraum des Gehäuses 22 weder als schwarzer Innenraum noch als homogener heller Innenraum ausgebildet. Vielmehr wird ein definierter Innenraum vorgeschlagen, der für die hier gegebene Inspektionsaufgabe vorteilhafter ausgestaltet ist, als bekannte Räume. Für die Etiketteninspektion wird eine zur Flaschenachse L parallel ausgerichtete Beleuchtung vorgesehen und nicht eine diffuse Beleuchtung. Die Beleuchtung leuchtet daher mit einem flachen Winkel von oben und/oder unten auf die Oberfläche des Behältnisses 10. Der flache Winkel ermöglicht reflexionsfreie Kamerabilder.

Die Bildaufnahmeeinrichtung ist im Wesentlichen senkrecht zu der Flaschenachse L angeordnet. Vorzugsweise ist die Beleuchtung so gestaltet, dass der Intensitätsverlauf bezogen auf die Flaschenhöhe gleich bleibt, aber auch einen Gradienten aufweisen kann. Vorzugsweise wird jedoch erreicht, dass das Behältnis 10 umfänglich in der gleichen Höhe gleichmäßig beleuchtet wird. Unter Umständen kann es auftreten, dass Oberflächen mit einer bestimmten Neigung (der Einfallswinkel der Beleuchtung = dem Austrittswinkel der Kamera) die Lampe im Kamerabild spiegeln. Hier kann die Blickrichtung der Bildaufnahmeeinrichtung geändert werden. Verändert man diese, beispielsweise durch eine zweite Kamera, die ergänzend zur ersten zu sehen ist, wird der Effekt umgangen. Die zweite Kamera ist dann nicht mehr senkrecht zur Behälterachse L ausgerichtet.

Gegenüber einer diffusen Beleuchtung besteht ein weiterer Vorteil darin, dass die jeweiligen Nachbarbehälter die Beleuchtung des zu inspizierenden Behältnisses 10 nicht stören und bei einer diffusen Ausleuchtung die benachbarten Behältnisse die Lichtverhältnisse auf dem zu inspizierenden Behältnis beeinflussen.

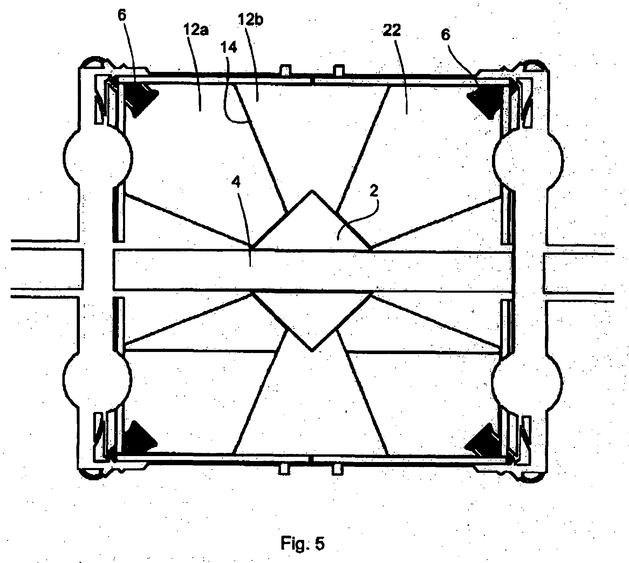

Figur 5 zeigt eine Draufsicht von unten auf die erfindungsgemäße Vorrichtung. Man erkennt hier insbesondere den Deckel 22 der Vorrichtung, der ebenfalls helle Bereiche 12a und dunkle Bereiche 12b aufweist. Auch hier erkennt man, dass zumindest teilweise der der Bildaufnahmeeinrichtung gegenüberliegende Sichtbereich des Gehäuses hell ausgekleidet ist. Die Frage nach den optischen Eigenschaften ist in diesem Fall zweitrangig. Genauer gesagt, sind nicht notwendigerweise bevorzugte Reflexionseigenschaften oder Diffusionseigenschaften nötig. Es genügt hier, die Kontur der dunklen Flaschen erkennen zu können.

Die Hintergrundfläche kann damit eine Farbe aufweisen, oder auch weiß sein. Wie oben erwähnt, wirken jedoch helle rotationssymmetrische Produkte, wie die hier gezeigten gefüllten Flaschen, wie eine Zylinderlinse. Der Blick durch den transparenten klaren Behälter wird nach dem optischen Gesetz abgelenkt und trifft nicht mehr auf den hellen Lichtbereich, sondern einen dunklen ausgeführten Bereich. Auf diese Weise erscheint, wie oben beschrieben, der Behälterrand dunkel.

Bevorzugt sind, wie in Figur 5 gezeigt, die Bildaufnahmeeinrichtungen symmetrisch verteilt. Damit wird der jeweils gegenüberliegende Bereich der Kamera hell ausgekleidet, die Bereiche links und rechts davon dunkel. Die hellen Bereiche werden nicht benötigt, um die Behälter bzw. deren Etiketten auf der Kameraseite auszuleuchten, sondern um im Durchlichtverfahren die Kontur des Behälters zu finden. Für eine allumfassende Lösung, d. h. für helle und dunkle Behälter (wobei jeweils auf die Kombination aus Behältermaterial und abgefüllten Produkt abgestellt werden muss) werden damit zusätzlich an einer geeigneten Stelle dunkle Flächen angebracht, wobei diese nur teilweise in der seitlichen Einhausung ausgebildet sind oder sich über die seitliche Einhausung hinaus auf den Deckel 22 oder den Boden des Gehäuses erstrecken. Bei mehreren umfänglich versetzten Teilabbildungen eines Behälters lassen sich so über die sauber abgegrenzten Konturen jeweils Position und Größe der Behälterabbildungen genau erfassen und können unabhängig von irgendwelchen zufallsbedingten Lage- oder Größentoleranzen der einzelnen Behälter auf einem Förderer zu einem präzisen Panoramabild vereint werden, das nun zur Etiketteninspektion oder dgl. auswertbar ist.

## Patentansprüche

1. Vorrichtung (1) zur Untersuchung der Außenoberflächen von Behältnissen, mit einer Strahlungseinrichtung (2), welche Licht auf ein zu untersuchendes Behältnis (10) richtet, mit einer Transporteinrichtung (4), welche das Behältnis (10) gegenüber der Strahlungseinrichtung (2) transportiert und mit einer Bildaufnahmeeinrichtung (6), welche ein Bild des von der Strahlungseinrichtung (2) beleuchteten Behältnisses (10) aufnimmt, wobei
ein Gehäuse (20) angeordnet ist, an dem ein Hintergrund ausgebildet ist, der in der Blickrichtung der Bildaufnahmeeinrichtung (6) hinter dem Behältnis (10) angeordnet ist und demgegenüber das Behältnis (10) abbildbar ist, und wobei der Hintergrund (12) wenigstens einen helleren Bereich (12b) und einem diesem helleren Bereich (12a) gegenüber dunkleren Bereich (12b) aufweist,
der hellere Bereich (12a) entlang einer geraden Linie, die ausgeht von der Bildaufnahmeeinrichtung (6) und durch die Längsrichtung (L) des Behältnisses (10) läuft, sich hinter dem Behältnis (10) befindet und sich an wenigstens einer Seite des helleren Bereichs (12a) ein dunklerer Bereich (12b) des Hintergrunds (12) anschließt,
**dadurch gekennzeichnet,dass**
- das Gehäuse (20) die Bildaufnahmeeinrichtung (6) und das zu beobachtende Behältnis (10) im Wesentlichen vollständig umgibt und der Hintergrund (12) Bestandteil dieses Gehäuses (20) ist, und
- die ausgerichtete Strahlungseinrichtung (2) das Licht in der Richtung parallel zur Längsrichtung (L) des Behältnisses (10) auf dieses einstrahlt.

2. Vorrichtung (1) nach Anspruch 1,
**dadurch gekennzeichnet, dass**
ein Kontrastbereich zwischen dem helleren Bereich (12a) und dem dunkleren Bereich (12b) im Wesentlichen vertikal verläuft.

3. Vorrichtung (1) nach wenigstens einem der vorangegangenen Ansprüche,
**dadurch gekennzeichnet, dass**
die Bildaufnahmeeinrichtung (6) das Behältnis (10) im Wesentlichen senkrecht zu der Längsrichtung (L) des Behältnisses beobachtet.

4. Vorrichtung (1) nach wenigstens einem der vorangegangenen Ansprüche,
**dadurch gekennzeichnet, dass**
die Vorrichtung (1) eine Vielzahl von Bildaufnahmeeinrichtungen (6) aufweist, welche in Umfangsrichtung um das Behältnis (10) angeordnet sind.

5. Vorrichtung (1) nach wenigstens einem der vorangegangenen Ansprüche.
**dadurch gekennzeichnet, dass**
das Gehäuse (20) einen in Richtung des Behältnisses gewandten Deckel (22) aufweist und dieser Deckel (22) sowohl hellere als auch dunklere Bereiche aufweist.

6. Vorrichtung (1) nach wenigstens einem der vorangegangenen Ansprüche,
**dadurch gekennzeichnet, dass**
zwischen der Strahlungseinrichtung (2) und dem Behältnis ein Linsenkörper (15) vorgesehen ist.

7. Vorrichtung (1) nach wenigstens einem der vorangegangenen Ansprüche,
**dadurch gekennzeichnet, dass**
die helleren Bereiche (12a) des Hintergrunds (12) jeweils den Bildaufnahmeeinrichtungen (6) in Blickrichtung im Wesentlichen gegenüberliegend im Gehäuse (20) angeordnet sind, vorzugsweise in dessen Eckbereichen bei eckiger Gehäuseausbildung.

8. Vorrichtung (1) nach wenigstens einem der vorangegangenen Ansprüche,
**dadurch gekennzeichnet, dass**
das Gehäuse einen Zuführbereich (26) für die Behältnisse (10) aufweist und dieser Zuführbereich in einem dunkleren Bereich (12b) des Hintergrunds (12) angeordnet ist.

9. Vorrichtung (1) nach wenigstens einem der vorangegangenen Ansprüche,
**dadurch gekennzeichnet, dass**
die Strahlungseinrichtung (2) eine gepulste Lichtquelle aufweist.

10. Verfahren zum Untersuchen der Außenoberflächen von Behältnissen (10) wobei die zu untersuchenden Behältnisse (10) mit einer Transporteinrichtung (4) transportiert werden, mittels einer Strahlungseinrichtung (2) beleuchtet werden und das von der Strahlungseinrichtung (2) beleuchtete Behältnis (10) von einer Bildaufnahmeeinrichtung (6) aufgenommen wird, wobei die Bildaufnahmeeinrichtung (6) ein ortsaufgelöstes Bild des aufgenommenen Lichts ausgibt, wobei
an einem Gehäuse und bezüglich der Bildaufnahmeeinrichtung (6) hinter dem Behältnis (10) ein Hintergrund angeordnet wird, wobei der Hintergrund (12) wenigstens einen helleren Bereich (12a) und einen gegenüber diesem helleren Bereich (12a) dunklere(n) Bereich(e) (12b) aufweist,
der hellere Bereich (12a) entlang einer geraden Linie, die ausgeht von der Bildaufnahmeeinrichtung (6) und durch die Längsrichtung (L) des Behältnisses (10) läuft, sich hinter dem Behältnis (10) befindet und sich an wenigstens einer Seite des helleren Bereichs (12a) ein dunklerer Bereich (12b) des Hintergrunds (12) anschließt,
**dadurch gekennzeichnet, dass**
- das Gehäuse (20) die Bildaufnahmeeinrichtung (6) und das zu beobachtende Behältnis (10) im Wesentlichen vollständig umgibt und der Hintergrund (12) Bestandteil dieses Gehäuses (20) ist, und
- die ausgerichtete Strahlungseinrichtung (2) das Licht in der Richtung parallel zur Längsrichtung (L) des Behältnisses (10) auf dieses einstrahlt.

11. Verfahren nach Anspruch 10,
**dadurch gekennzeichnet, dass** bei hellen Behältnissen die Kontur vor den dunkleren Bereichen (12b) abgegrenzt sichtbar gemacht und daraus die exakte Position und Größe der Behältnisse bestimmt wird, insbesondere zum genauen Zusammensetzen eines Panoramabildes aus mehreren Teilansichten eines Behältnisses, das dann inspiziert und ausgewertet wird.

## Claims

1. A device (1) for inspecting the external surfaces of containers, including a radiation device (2) directing light onto a container (10) to be inspected, including a transport device (4) which transports the container (10) with respect to the radiation device (2), and including an image capturing device (6) capturing an image of the container (10) illuminated by the radiation device (2), a housing (20) being arranged on which a background is created, the background (12) being arranged behind the container (10) in the viewing direction of the image capturing device (6), with respect to which the container (10) can be imaged and wherein the background (12) has at least a lighter area (12a) and a darker area (12b) with respect to this lighter area (12a), wherein the lighter area (12a) runs along a straight line, which originates from the image capturing device (6) and extends through the longitudinal direction (L) of the container (10), is situated behind the container (10) and a darker area (12b) of the background (12) follows at least one side of the lighter area (12a),
**characterized in that**
- the housing (20) substantially completely surrounds the image capturing device (6) and the container (10) to be inspected and the background (12) is a component of said housing (20) and
- the oriented radiation device (2) radiates the light in the direction parallel to the longitudinal direction (L) of the container (10) onto the latter.

2. The device (1) as claimed in claim 1, **characterised in that** an area of contrast between the lighter area (12a) and the darker area (12b) extends essentially vertically.

3. The device (1) as claimed in at least one of the preceding claims, **characterised in that** the image capturing device (6) views the container (10) essentially vertically relative to the longitudinal direction (L) of the container.

4. The device (1) as claimed in at least one of the preceding claims, **characterised in that** the device (1) has a plurality of image capturing devices (6) disposed in the circumferential direction around the container (10).

5. The device (1) as claimed in at least one of the preceding claims, **characterised in that** the housing (20) has a cover surface (22) facing in the direction of the container, and this cover surface (22) has both lighter and darker areas.

6. The device (1) as claimed in at least one of the preceding claims, **characterised in that** a lens body (15) is provided between the radiation device (2) and the container.

7. The device (1) as claimed in at least one of the preceding claims, **characterised in that** the lighter areas (12a) of the background (12) are each disposed in the housing (20) essentially opposite the image capturing devices (6) in the viewing direction, preferably in the corner areas thereof in the case of an angularly shaped housing.

8. The device (1) as claimed in at least one of the preceding claims, **characterised in that** the housing has an inlet area (26) for the containers (10) and this inlet area is disposed in a darker area (12b) of the background (12).

9. The device (1) as claimed in at least one of the preceding claims, **characterised in that** the radiation device (2) has a pulsed light source.

10. A process for inspecting the external surfaces of containers (10), wherein the containers (10) to be inspected are transported by means of a transport device (4), are illuminated by means of a radiation device (2), and the container (10) illuminated by the radiation device (2) is captured by means of an image capturing device (6), said capturing device (6) outputting a spatially resolved image of the captured light, wherein a background is arranged at the housing and with respect to the image capturing device (6) behind the container, said background (12) having at least one lighter area (12a) and one or more darker area(s) (12b) with respect to this lighter area (12a), wherein the lighter area (12) runs along a straight line, which originates from the image capturing device (6) and extends through the longitudinal direction (L) of the container (10) is situated behind the container (10) and a darker area (12b) of the background (12) immediately follows at least one side of the lighter area,
**characterized in that**
- the housing (20) substantially completely surrounds the image capturing device (6) and the container (10) to be inspected and the background (12) is a component of said housing (20) and
- the oriented radiation device (2) radiates the light in the direction parallel to the longitudinal direction (L) of the container (10) onto the latter.

11. The method as claimed in claim 10, **characterised in that** in the case of lighter containers, the contour is made to be visibly defined in front of the darker areas (12b), and the exact position and size of the container are determined therefrom, in particular for an accurate composition of a panorama image from several partial views of a container, which is then inspected and evaluated.

## Revendications

1. Dispositif (1) servant à inspecter les surfaces extérieures de récipients, comprenant un système de rayonnement (2), qui dirige de la lumière sur un récipient (10) à examiner, comprenant un système de transport (4), qui transporte le récipient (10) par rapport au système de rayonnement (2) et comprenant un système de prise d'images (6), qui prend une image du récipient (10) éclairé par le système de rayonnement (2), dans lequel est disposé un boîtier (20), au niveau duquel un arrière-plan est réalisé, qui est disposé, dans la direction de visée du système de prise d'images (6), derrière le récipient (10) et par rapport auquel le récipient (10) peut être reproduit, et dans lequel l'arrière-plan (12) présente au moins une zone plus claire (12b) et une zone plus foncée (12b) par rapport à ladite zone plus claire (12a), dans lequel la zone plus claire (12a) se trouve le long d'une ligne droite, qui part du système de prise d'images (6) et s'étend à travers la direction longitudinale (L) du récipient (10), derrière le récipient (10) et une zone plus foncée (12b) de l'arrière-plan (12) se situe dans le prolongement au moins d'un côté de la zone plus claire (12a),
**caractérisé en ce que**
- le boîtier (20) entoure sensiblement totalement le système de prise d'images (6) et le récipient (10) à observer, et l'arrière-plan (12) fait partie intégrante dudit boîtier (20), et
- le système de rayonnement (2) orienté envoie, dans la direction parallèle par rapport à la direction longitudinale (L) du récipient (10), de la lumière sur ce dernier.

2. Dispositif (1) selon la revendication 1,
**caractérisé en ce qu'**
une zone de contraste s'étend sensiblement verticalement entre la zone plus claire (12a) et la zone plus foncée (12b).

3. Dispositif (1) selon au moins l'une quelconque des revendications précédentes,
**caractérisé en ce que**
le système de prise d'images (6) observe le récipient (10) sensiblement de manière perpendiculaire par rapport à la direction longitudinale (L) du récipient.

4. Dispositif (1) selon au moins l'une quelconque des revendications précédentes,
**caractérisé en ce que**
le dispositif (1) présente une pluralité de systèmes de prise d'images (6), qui sont disposés dans la direction périphérique autour du récipient (10).

5. Dispositif (1) selon au moins l'une quelconque des revendications précédentes,
**caractérisé en ce que**
le boîtier (20) présente un couvercle (22) tourné en direction du récipient, et **en ce que** ledit couvercle (22) présente des zones aussi bien plus claires que plus foncées.

6. Dispositif (1) selon au moins l'une quelconque des revendications précédentes,
**caractérisé en ce qu'**
un corps de lentille (15) est prévu entre le système de rayonnement (2) et le récipient.

7. Dispositif (1) selon au moins l'une quelconque des revendications précédentes,
**caractérisé en ce que**
les zones plus claires (12a) de l'arrière-plan (12) sont disposées dans le boîtier (20) respectivement sensiblement en vis-à-vis des systèmes de prise d'images (6) dans la direction de visée, de préférence dans des zones d'angle dudit boîtier lorsque le boîtier est réalisé avec des angles.

8. Dispositif (1) selon au moins l'une quelconque des revendications précédentes,
**caractérisé en ce que**
le boîtier présente une zone d'amenée (26) pour les récipients (10), et **en ce que** ladite zone d'amenée est disposée dans une zone plus foncée (12b) de l'arrière-plan (12).

9. Dispositif (1) selon au moins l'une quelconque des revendications précédentes,
**caractérisé en ce que**
le système de rayonnement (2) présente une source de lumière pulsée.

10. Procédé servant à examiner les surfaces extérieures de récipients (10), dans lequel les récipients (10) à examiner sont transportés avec un système de transport (4), sont éclairés au moyen d'un système de rayonnement (2) et un système de prise d'images (6) prend le récipient (10) éclairé par le système de rayonnement (2), dans lequel le système de prise d'images (6) fournit une image à résolution locale de la lumière prise,
dans lequel
un arrière-plan est disposé au niveau d'un boîtier et, par rapport au système de prise d'images (6), derrière le récipient (10), dans lequel l'arrière-plan (12) présente au moins une zone plus claire (12a) et une/des zone(s) plus foncée/foncées (12b) par rapport à ladite zone plus claire (12a),
dans lequel
la zone plus claire (12a) se trouve le long d'une ligne droite, qui part du système de prise d'images (6) et s'étend à travers la direction longitudinale (L) du récipient (10), derrière le récipient (10) et une zone plus foncée (12b) de l'arrière-plan (12) se situe dans le prolongement au moins d'un côté de la zone plus claire (12a),
**caractérisé en ce que**
- le boîtier (20) entoure sensiblement totalement le système de prise d'images (6) et le récipient (10) à observer, et **en ce que** l'arrière-plan (12) fait partie intégrante dudit boîtier (20), et
- le système de rayonnement (2) orienté envoie, dans la direction parallèle par rapport à la direction longitudinale (L) du récipient (10), de la lumière sur ce dernier.

11. Procédé selon la revendication 10,
**caractérisé en ce que**
dans le cas des récipients clairs, le contour est rendu visible par une démarcation devant les zones plus foncées (12b), **en ce que** sur cette base la position et la dimension exactes des récipients sont déterminées, en particulier afin de composer avec précision une image panoramique composée de plusieurs vues partielles d'un récipient, lequel est alors inspecté et analysé.
